**Europäisches Patentamt**

**European Patent Office**

**Office européen des brevets**

(19)

(11) Veröffentlichungsnummer: **0 608 479 A2**

(12) # EUROPÄISCHE PATENTANMELDUNG

(21) Anmeldenummer: **93114697.1**

(22) Anmeldetag: **13.09.93**

(51) Int. Cl.5: **B23F 5/08**, B23F 5/20, B23F 15/00, B23F 21/02, B23F 21/12

(30) Priorität: **21.01.93 DE 4301561**

(43) Veröffentlichungstag der Anmeldung: **03.08.94 Patentblatt 94/31**

(84) Benannte Vertragsstaaten: **CH DE ES FR GB IT LI SE**

(71) Anmelder: **LIEBHERR-VERZAHNTECHNIK GmbH**
**Kaufbeurer Strasse 141**
**D-87437 Kempten(DE)**

(72) Erfinder: **Ophey, Lothar, Dr.-Ing.**
**Förderreutherweg 8**
**D-87439 Kempten(DE)**
Erfinder: **Glatzeder, Hans**
**Rheinlandstrasse 25**
**D-87437 Kempten(DE)**
Erfinder: **Haas, Gebhard**
**Wiesstrasse 31 A**
**D-87435 Kempten(DE)**

(74) Vertreter: **Klunker . Schmitt-Nilson . Hirsch**
**Winzererstrasse 106**
**D-80797 München (DE)**

(54) **Verfahren und Vorrichtung zur Verzahnungsherstellung.**

(57) Verfahren sowie Vorrichtung zur Verzahnungsherstellung, insbesondere zur Herstellung von Zahnrädern oder Zahnradsegmenten, in einem Teilwälzverfahren, wobei ein um seine Längsachse rotierendes Verzahnungswerkzeug (11) mit in zueinander parallelen Ebenen im Abstand jeweils einer Teilung der herzustellenden Verzahnung angeordneten Teilwerkzeugen (15) in einen Teilkreis (24) eines mit der Verzahnung zu versehenen Werkstückes (13) eingreift und während des Eingriffs mit einer axialen Vorschubbewegung überlagert auf diesem abwälzt, wobei jeder Zahnlücke (25) ein Teilwerkzeug (15) zugeordnet ist.

FIG.1

EP 0 608 479 A2

Die vorliegende Erfindung betrifft ein Verfahren sowie eine Vorrichtung zur Verzahnungsherstellung, insbesondere zur Herstellung von Zahnrädern oder Zahnradsegmenten, in einem Teilwälzverfahren.

Teilwälzverfahren zur Herstellung von Verzahnungen an Zahnrädern oder Zahnradsegmenten werden insbesondere dann angewendet, wenn lediglich in einem Teilbereich des Teilkreises eine Verzahnung des Werkstückes erfolgen soll. Bisher ist es bekannt, Verzahnungen durch den Einsatz von Schleifwerkzeugen im Teilwälzverfahren, also in einem Teilwälzschleifverfahren, herzustellen. Bei diesem Verfahren wird das Schleifwerkzeug in eine zuvor auszuräumende Lücke im Teilkreis des Werkstückes eingefahren und das mit der Verzahnung zu versehene Werkstück walzt infolge zweier nacheinanderfolgender gegenläufiger Drehbewegungen des Werkstückes mit jeweils einer Zahnflanke am Schleifwerkzeug ab. Entsprechend der Anzahl der zu fertigenden Zähne muß das Schleifwerkzeug nach dem Wälzschleifen zweier durch eine Zahnlücke voneinander beabstandeter Zahnflanken aus der Zahnlücke herausgefahren, das Werkstück um eine Teilung weitergedreht und das Schleifwerkzeug wieder in die nächste Zahnlücke eingefahren werden, um auch die dort einander gegenüberliegenden Zahnflanken bearbeiten zu können.

Insbesondere wegen der einander gegenläufigen Drehbewegungen des Werkstückes zum Abwälzen von gegenüberliegenden Zahnflanken am Schleifwerkzeug erfordert das bekannte Teilwälzschleifverfahren hohe Werkstückbearbeitungszeiten, die sich nachteilig auf die Herstellungskosten auswirken.

Bei den bekannten Wälzfräsverfahren, die zur Herstellung von Schneckenradverzahnungen mittels eines als Schnecke ausgebildeten Fräswerkzeuges dienen, wird die Verzahnung durch kontinuierliches Abwälzen der Schnecke auf dem Werkstück erzeugt. Um mittels dieses Verfahrens lediglich eine Segmentverzahnung in einen Teilbereich des Werkstückteilkreises herzustellen, muß das Werkstück dennoch auch über den verzahnungsfreien Teilkreisumfang vorgetrieben werden, um immer wieder in dem beabsichtigten Teilbereich des Teilkreises einen Eingriff des Verzahnungswerkzeuges in das Werkstück zu ermöglichen. Daraus ergeben sich insgesamt wesentlich längere Fräszeiten als zur Herstellung der Segmentverzahnung notwendig wären.

Insbesondere zur Herstellung von Zahnradsegmenten, die Störkonturen aufweisen, ist eine Verzahnungsherstellung mittels eines Wälzfräsverfahrens der geschilderten Art ungeeignet. Solche mit Störkonturen versehenen Zahnradsegmente finden beispielsweise in Seitenbeschlageinrichtungen von Autositzen Verwendung, wo die Segmentverzahnung für eine kontinuierliche Verstellmöglichkeit der Rückenlehne sorgen soll, und die beidseitig zur Segmentverzahnung angeordneten Störkonturen zur Bildung von Schwenkbegrenzungsanschlägen dienen. Da bei den Wälzfräsverfahren wegen der Wälzkopplung zwischen der Drehachse des Verzahnungswerkzeuges und der Drehachse des Werkstückes die Schnittgeschwindigkeit im Verhältnis zur Werkstückdrehzahl steht, müßte die Schnittgeschwindigkeit bei mit Störkonturen versehenen Zahnradsegmenten gegen 0 gerichtet werden, um eine Überbeanspruchung des Verzahnungswerkzeuges beim Abwälzen im Segmentbereich mit der möglichen Konsequenz eines Werkzeugbruchs zu vermeiden.

Natürlich besteht auch die Möglichkeit zum Einbringen einer Teilverzahnung in ein Werkstück in einem Teilverfahren Zahnlücke für Lücke auszuräumen und dabei gleichzeitig über die Profilierung des Fräswerkzeuges, etwa einem Scheibenfräser, ohne einen Abwälzvorgang die Zahnflankenkontur zu bestimmen. Zum einen ist dieses Verfahren jedoch durch hohe Fräszeiten bestimmt. Zum anderen erweist sich das bekannte Einzelteilverfahren wegen der erreichbaren Oberflächengüten als unzureichend für die Herstellung hochbeanspruchter Verzahnungen.

Der vorliegenden Erfindung liegt die Aufgabe zugrunde, ein Verfahren bzw. eine Vorrichtung zu schaffen, das bzw. die eine Verzahnungsherstellung in einem kontinuierlich fortschreitenden Teilwälzverfahren ermöglicht.

Diese Aufgabe wird durch die Merkmale des Anspruchs 1 gelöst.

Bei dem erfindungsgemäßen Teilwälzverfahren wird ein Verzahnungswerkzeug, das mehrere parallel zueinander im Abstand von jeweils einer Teilung angeordnete Teilwerkzeuge aufweist, mit dem Teilkreis des zu bearbeitenden Werkstückes in Eingriff gebracht und wälzt überlagert mit einer axialen Vorschubbewegung auf diesem ab, wobei infolge des vorgegebenen Abstands zwischen den Teilwerkzeugen jedes Teilwerkzeug zur Herstellung einer Zahnlücke dient.

Da das bei dem erfindungsgemäßen Verfahren verwendete Verzahnungswerkzeug keine Steigung aufweist, ist die Schnittgeschwindigkeit von der Werkstückdrehzahl entkoppelt und es ist möglich, bei extrem geringer Werkstückdrehzahl und entsprechend den Oberflächengütevorgaben der Zahnflanken die Schnittgeschwindigkeit des Verzahnungswerkzeuges frei zu wählen. Die Werkstückdrehzahl wird allein durch den unabhängig von der Werkzeugdrehzahl einstellbaren, axialen Vorschub des Verzahnungswerkzeuges bestimmt.

Gemäß einer bevorzugten Variante des erfindungsgemäßen Verfahrens läßt sich dieses nicht nur zur Bearbeitung der Zahnflanken sondern auch zum Ausräumen der Zahnlücken verwenden. Hierbei wird zu Beginn des Verfahrens das Verzahnungswerkzeug bei axialem Nullvorschub mit seinem in Vorschubrichtung vordersten Teilwerkzeug bis auf Zahnhöhe in den Teilkreis des Werkstückes eingefahren und anschließend bei einer Kopplung der axialen Vorschubachse des Verzahnungswerkzeuges mit der Rotationsachse des Werkstücks auf dem Teilkreis des Werkstücks abgewälzt. Hierbei geschieht das Ausräumen der in Umdrehungsrichtung des Werkstücks nachfolgenden Zahnlücken bei ausreichend hoher Schnittgeschwindigkeit des Verzahnungswerkzeuges während des Abwälzens desselben auf dem Werkstückteilkreis.

Zur Erzielung einer Schrägverzahnung bei dem zu bearbeitenden Werkstück kann das Verzahnungswerkzeug zur Ebene des Werkstücks um einen Steigungswinkel angestellt werden. Um diesen Steigungswinkel für alle Zahnflanken gleichbleibend zu erzielen, kann erfindungsgemäß das Werkstück während des Abwälzvorgangs kontinuierlich um die Komponente des axialen Vorschubes in Richtung der Rotationsachse des Werkstücks auf das Verzahnungswerkzeug zubewegt werden. Durch diese Maßnahme wird nämlich dafür gesorgt, daß die Lage der Kreuzungspunkte zwischen dem Teilkreis und der Vorschubachse des Verzahnungswerkzeuges während des gesamten Abwälzvorgangs erhalten bleibt.

Zum Herstellen und Bearbeiten von Zahnrädern mit einer Breite, die mit einem Werkzeug entsprechenden Durchmessers nicht in einem Arbeitsgang ausgeräumt bzw. hergestellt werden können, kann der Abwälzvorgang mehrere Male hintereinander wiederholt werden, wobei das Werkzeug nach jedem Abwälzvorgang um einen bestimmten Betrag in Richtung der Zahnbreite versetzt wird. Die Notwendigkeit eines solchen mehrfachen Abwälzens ergibt sich aus der zugelassenen Tiefe der vom Werkzeug erzeugten Vorschubmarkierung. Ist die Zahnbreite im Verhältnis zur Vorschubmarkierungslänge x-mal größer, so können die Zahnflanken des Werkstückes nicht durch einen einmaligen Abwälzvorgang erzeugt werden. Der Abwälzvorgang muß deshalb x-mal wiederholt werden. Wählt man für die einzelnen Abwälzvorgänge unterschiedliche Eintauchtiefen, können zylindrische, kegelige oder auch ballige Zahnflanken erzeugt werden.

Außer Verzahnungen mit gleichbleibender Teilung können auch Verzahnungen mit ungleichen Teilungen nach dem erfindungsgemäßen Verfahren hergestellt werden, z. B. Lenkritzel mit einem dikken "Mittenzahn". Für die Herstellung eines solchen Ritzels wird entweder ein Werkzeug verwendet, bei dem der Abstand der scheibenförmigen Teilwerkzeuge ebenfalls ungleich ist, d. h. der unterschiedlichen Teilung der herzustellenden Verzahnung entspricht. Wenn nur ein Werkzeug mit im gleichen Abstand angeordnetem Teilwerkzeugen zur Verfügung steht, kann ein Zahnradsegment mit einem Mittenzahn anderer Dicke dadurch hergestellt werden, daß zunächst die eine Hälfte des Segments mit der Flanke des Mittenzahns hergestellt wird und dann von der anderen Seite die zweite Hälfte des Zahnradsegments bis wiederum zur anderen Flanke des Mittenzahns. Die Dicke dieses Zahns kann im Vergleich zu den übrigen Zähnen größer oder auch kleiner gewählt werden.

Statt Zahnradsegmenten können auch komplette Verzahnungen hergestellt werden, insbesondere Ritzel mit Kleiner Zähnezahl, wobei das Werkzeug mindestens so viele Teilwerkzeuge aufweist, wie das Ritzel Zähne hat oder bei geringerer Anzahl an Teilwerkzeugen ein Weiterteilen um eine endliche Teilung und erneutes Wälzen erfolgt.

Das erfindungsgemäße Verfahren kann sowohl mit einem als Schleifwerkzeug ausgeführten Verzahnungswerkzeug als auch mit einem als Fräswerkzeug ausgeführten Verzahnungswerkzeug durchgeführt werden.

Die erfindungsgemäße Vorrichtung weist die Merkmale des Anspruchs 6 auf.

Die erfindungsgemäße Vorrichtung ist mit einem Verzahnungswerkzeug versehen, das mit mehreren, jeweils im Abstand einer Teilung der herzustellenden Verzahnung parallel zueinander angeordneten Teilwerkzeugen ausgestattet ist. Diese Teilwerkzeuge sind auf einer gemeinsamen Werkzeuglängsachse angeordnet. Weiterhin weist die erfindungsgemäße Vorrichtung eine Werkstückaufnahme auf, die bezüglich ihrer Rotationsachse mit der Vorschubachse des Verzahnungswerkzeuges koppelbar ist.

Die erfindungsgemäße Vorrichtung ermöglicht die Durchführung eines Teilwälzverfahrens, bei dem die Schnittgeschwindigkeit des rotierenden Verzahnungswerkzeuges unabhängig von der Drehzahl des auf einer Werkstückaufnahme aufgenommenen Werkstückes ist. Der Abwälzvorgang des Verzahnungswerkzeuges auf dem Teilkreis des Werkstückes wird allein durch den Vorschub der Werkzeuglängsachse bestimmt. Die mit dieser Entkoppelung von Verzahnungswerkzeugrotation und Verzahnungswerkzeugvorschub zusammenhängenden Vorteile sind vorstehend bereits ausführlich geschildert worden.

Das Verzahnungswerkzeug kann mehrere, scheibenförmig ausgebildete, einstückig ineinanderübergehende Fräsbereiche aufweisen. Diese vorteilhafte Ausführungsform des Verzahnungswerkzeuges läßt sich etwa mit dem Begriff "Blockfräser" beschreiben. Blockfräser lassen sich besonders vorteilhaft zur Herstellung von Schneckenrädern verwenden.

Auch besteht die Möglichkeit, das Verzahnungswerkzeug aus mehreren, auf einer gemeinsamen Werkzeuglängsachse angeordneten Scheibenfräsern zu gestalten. Diese vorteilhafte Ausführung des Verzahnungswerkzeuges bietet die Möglichkeit, ansich konventionelle, einzelne Scheibenfräser zum Aufbau des Verzahnungswerkzeuges zu verwenden.

Alternativ zu einer Ausführung als Fräswerkzeug kann das Verzahnungswerkzeug auch mehrere, scheibenförmig ausgebildete, einstückig ineinander übergehende Schleifbereiche aufweisen.

Auch bei einer Ausführung als Schleifwerkzeug kann das Verzahnungswerkzeug mit mehreren, auf einer gemeinsamen Werkzeuglängsachse angeordneten, einzelnen Schleifscheiben versehen sein.

Eine bevorzugte Ausführungsform des erfindungsgemäßen Verfahrens sowie der erfindungsgemäßen Vorrichtung wird nachfolgend anhand der Zeichnungen näher erläutert. Es zeigen:

| Fig. 1 | Eine erfindungsgemäße Vorrichtung zur Durchführung des erfindungsgemäßen Teilwälzverfahrens zur Herstellung einer Segmentverzahnung an einem Werkstück; |
| --- | --- |
| Fig. 2 | die Vorrichtung gemäß Fig. 1 in einer Ansicht entsprechend dem Pfeil II in Fig. 1; |
| Fig. 3 | eine Darstellung des Verzahnungseingriffs zwischen dem Verzahnungswerkzeug und dem Werkstück im Schnitt III-III in Fig. 1; |
| Fig. 4a - d | die Darstellungen von durch mehrmaliges Abwälzen des Verzahnungswerkzeuges hergestellten Werkstückverzahnungen; |
| Fig. 5 | die Darstellung eines Lenkritzels mit einem dicken Mittenzahn; |
| Fig. 6 | ein Werkzeug mit ungleicher Teilung und |
| Fig. 7 | ein Lenkritzel mit einem dicken Mittenzahn und die zwei Positionen des Werkzeuges während der Herstellung bzw. Bearbeitung. |

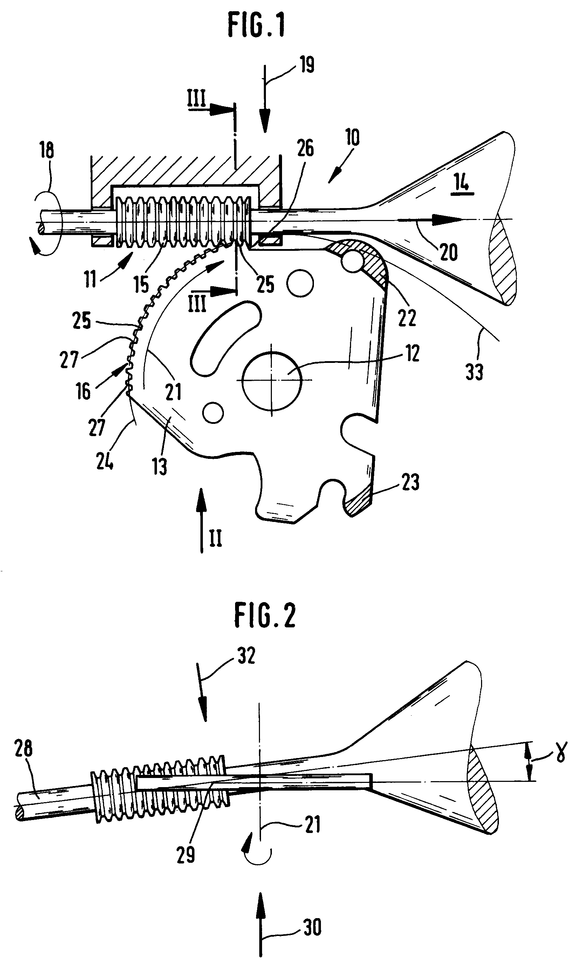

Fig. 1 zeigt eine Teilwälzvorrichtung 10 mit einem Verzahnungswerkzeug 11 und einem auf einer Werkstückaufnahme 12 aufgenommenen Werkstück 13.

Das Verzahnungswerkzeug 11 weist eine Werkzeugwelle 14 zur Aufnahme von einzelnen, äquidistant voneinander beabstandeten Scheibenfräsern 15 auf. Die Scheibenfräser 15 sind drehmomentenfest mit der Werkzeugwelle 14 verbunden und weisen jeweils einen Abstand voneinander auf, der der Teilung einer auf dem Werkstück 13 zu erzeugenden Segmentverzahnung 16 entspricht. In Fig. 1 ist bereits die fertiggestellte Segmentverzahnung 16 dargestellt, obwohl sich das Verzahnungswerkzeug 11 tatsächlich erst mit seinen äußersten rechten Rand angeordneten Scheibenfräsern 15 im Eingriff mit dem Werkstück 13 befindet. Zur biegesteifen Abstützung der Werkzeugwelle 14 ist im Bereich des Verzahnungswerkzeuges 11 eine Lünette 17 vorgesehen.

Das Verzahnungswerkzeug 11 weist eine Rotationsachse 18, eine Radialvorschubachse 19 und eine Axialvorschubachse 20 auf. Das Werkstück 13 ist mit einer mit der Axialvorschubachse 20 des Verzahnungswerkzeuges 11 gekoppelten Rotationsachse 21 versehen. Um diese rotiert es zusammen mit der entsprechend gelagerten Werkstückaufnahme 12.

Die am Werkstück 13 schraffiert dargestellten Randbereiche 22, 23 stellen sogenannte "Störkonturen" dar, die über einen Kopfkreis 33 der Segmentverzahnung 16 hinausragen und somit eine Rotation des Werkstücks 13 über die Randbereiche 22, 23 hinaus verhindern.

Zur Herstellung der Segmentverzahnung 16 wird das um die Rotationsachse 18 rotierende Verzahnungswerkzeug 11 in der in Fig. 1 dargestellten Stellung des Werkstückes 13 in Richtung der Radialvorschubachse 19 in den Teilkreis bzw. Erzeugungswälzkreis 24 des Werkstückes 13 eingefahren. Während dieses anfänglichen Einfahrens bzw. Eintauchens des Verzahnungswerkzeuges 11 in das Werkstück 13 ist der Vorschub in Richtung der Axialvorschubachse 20 gleich Null. Während dieser Phase findet demnach noch kein Abwälzen des Verzahnungswerkzeuges 11 auf dem Teilkreis 24 des Werkstückes 13 statt sondern lediglich ein Eintauchen in diesen zum Zwecke des Ausräumens einer äußersten Zahnlücke 25 bzw. einer Bearbeitung eines Verzahnungsanfanges 26.

Erst nach dem vollständigen Ausräumen der ersten Zahnlücke 25 wird die Rotationsachse 18 mit der Axialvorschubachse 20 überlagert, wodurch sich infolge des Eingriffs zwischen dem Verzahnungswerkzeug 11 und dem Werkstück 13 eine Bewegungskopplung zwischen dem Verzahnungswerkzeug 11 und dem Werkstück 13 ergibt, mit der Folge, daß das Werkstück 13 in Richtung der Rotationsachse 21 rotiert. Hieraus ergibt sich ein Abwälzvorgang des Verzahnungswerkzeuges 11 auf dem Teilkreis 24 des Werkstückes 13, wodurch kontinuierlich entgegen der Drehrichtung des Werkstückes 13 fortlaufend weitere Zahnlücken in dieses eingeschnitten werden, und gleichzeitig eine Bearbeitung von durch die Zahnlücken 25 voneinander beabstandeten Zahnflanken 27 erfolgt.

Wie aus Fig. 1 zu ersehen ist, ist bei dem beispielhaft dargestellten Verzahnungswerkzeug 11 die Anzahl der hintereinander angeordneten Scheibenfräser 15 nicht ausreichend, um die Segmentverzahnung 16 über die vollständige Verzahnungslänge herzustellen. Um die Segmentverzahnung 16 jedoch dennoch vollständig herstellen zu können, kann das Verzahnungswerkzeug 11 entgegen der Radialvorschubachse 19 außer Eingriff mit dem Werkstück 13 gebracht, entgegen der Axialvorschubachse 20 geshiftet und an geeigneter Stelle wieder erneut mit dem Werkstück 13 in Eingriff gebracht werden, um die verbliebene Restlänge der Segmentverzahnung 16 herzustellen. Der bei der Shiftbewegung durch geführte Shiftbetrag entspricht dabei einem ganzzahligen Vielfachen der Verzahnungsteilung ("Teilungsshiften").

Die vorstehend zu Fig. 1 gemachten Erläuterungen gelten sowohl für die Herstellung einer Geradverzahnung als auch für die Herstellung einer Schrägzahnung.

Zur Erläuterung der bei einer Schrägverzahnung bestehenden Besonderheiten des Verfahrens bzw. der Vorrichtung wird auf Fig. 2 verwiesen, in der die in Fig. 1 dargestellte Vorrichtung in der Ansicht II und mit einer um den Steigungswinkel $\gamma$ gegenüber der Ebene des Werkstückes 13 geneigten Längsachse des Verzahnungswerkzeuges 11. Mittels dieser Vorrichtungsanordnung läßt sich eine in Fig. 2 nicht näher dargestellte Segmentverzahnung erzeugen, die eine dem Steigungswinkel $\gamma$ entsprechende Schrägstellung der Zähne aufweist. Bei der Erzeugung der Segmentverzahnung ergeben sich zwischen den Flanken der Scheibenfräser 15 des Verzahnungswerkzeuges 11 und dem Teilkreis 24 des Werkstückes 13 Berührungspunkte 29. Damit all diese Berührungspunkte 29 trotz der um den Steigungswinkel $\gamma$ zueinander angestellten Rotationsachsen 18 und 21 des Verzahnungswerkzeuges 11 und des Werkstückes 13 beim Abwälzvorgang auf einer Erzeugungsgeraden 28 angeordnet sind, wird das Werkstück 13 während des Abwälzen stetig um die Komponente des Axialvorschubs V des Verzahnungswerkzeuges 11 in Richtung der Rotationsachse 21, wie durch den Pfeil 30 dargestellt, auf das Verzahnungswerkzeug 11 zubewegt. Entsprechend den in Fig. 2 dargestellten geometrischen Bedingungen gilt für die Richtungskomponente des Axialvorschubs V:

$$V_\gamma = V \times \sin \gamma$$

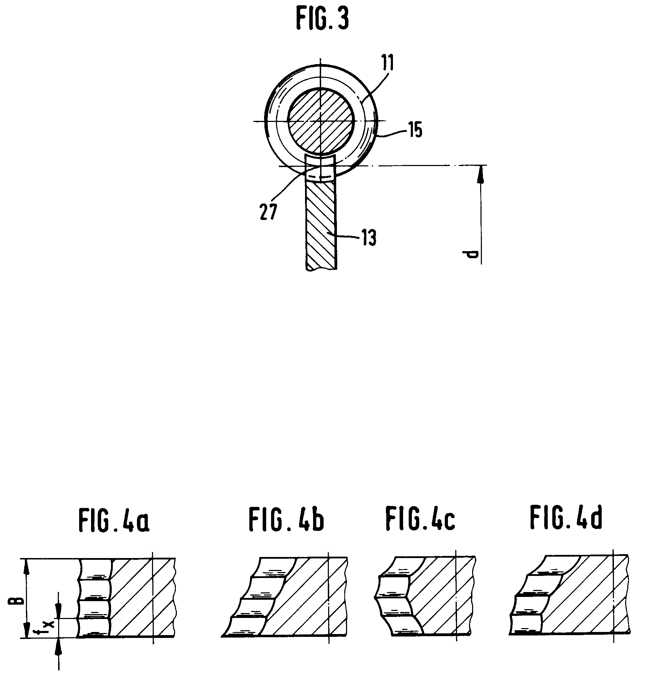

Fig. 3 zeigt eine Schnittdarstellung der Verzahnung zwischen dem Verzahnungswerkzeug 11 und dem Werkstück 13 entsprechend dem Schnittlinienverlauf III-III in Fig. 1. Bei der hier beispielhaft dargestellten Verzahnung handelt es sich um eine sogenannte Globoid-Verzahnung, wobei das Werkstück 13 hier in dem der Segmentverzahnung 16 (Fig. 1) entsprechenden Bereich als Schneckenrad ausgeführt ist. Aus Fig. 3 ist weiterhin deutlich zu erse

hen, wie die einzelnen Scheibenfräser 15, die im Verbund das Verzahnungswerkzeug 11 bilden, in den Teilkreis mit dem Durchmesser d zur Erzeugung der Segmentverzahnung 16 (Fig. 1) und der entsprechenden Zahnflanken 27 eingreifen.

Fig. 4a zeigt in einer Schnittdarstellung die Verzahnung eines Werkstückes 13 mittels der in Fig. 2 dargestellten Vorrichtung, bei der zur Erzeugung einzelner Zahnflanken 31 ein mehrmaliges Abwälzen des Verzahnungswerkzeuges 11 auf dem Werkstück 13 erfolgt, um schließlich über die gesamte Zahnbreite B Zahnflanken 31 entsprechend der Darstellung in Fig. 4 herzustellen. Hierbei wird bei jedem Abwälzvorgang lediglich ein Teilbereich $f_x$ der Zahnbreite B erzeugt und nach jeweils einem vollständigen Abwälzvorgang über die gesamte Länge der Segmentverzahnung 16 das Verzahnungswerkzeug 11 durch ein Quershiften in Richtung des in Fig. 2 dargestellten Pfeils 32 quer zur Erzeugungsgeraden 28 vorbewegt, um nachfolgend in einer entsprechenden Anzahl von weiteren Abwälzvorgängen die zur Erzeugung der gesamten Zahnbreite B notwendigen weiteren Teilzahnbreiten $f_x$ zu erzeugen.

Figuren 4b bis d zeigen kegelige Zahnflanken (b) und ballige Zahnflanken (c) sowie Kombinationen daraus (d). Diese Zahnflanken werden dadurch erzeugt, daß Werkzeug und Werkstück bei den einzelnen Abwälzvorgängen unterschiedlich tief zugestellt werden. Zum Erzeugen balliger Formen wird die Ebene der Abwälzbewegung zur Stirnfläche des Zahnrades um einen bestimmten Winkel angestellt.

Die Notwendigkeit mehrfachen Abwälzens ergibt sich aus der zulässigen Tiefe der Vorschubmarkierungen. Ein Werkzeug mit einem großen Durchmesser erzeugt flache Vorschubmarkierungen, ein Werkzeug mit einem kleinen Durchmesser erzeugt bei gleicher Länge entsprechend tiefere Vorschubmarkierungen.

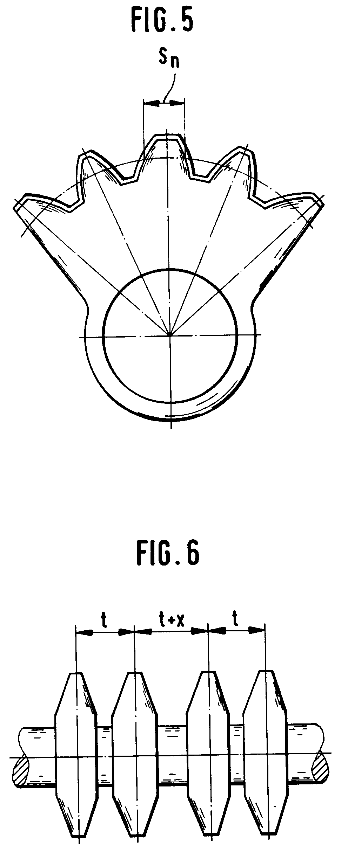

Fig. 5 zeigt schematisch die Draufsicht auf ein Lenkritzel mit einem Mittenzahn 10 der Dicke $Sn_2$. Die übrigen Zähne des Ritzels haben die gleichbleibende Dicke $Sn_1$, so daß gilt $Sn_2 \neq Sn_1$. Derartige Verzahnungen haben in Mittelstellung nahezu kein Spiel, was für die Lenkung eines Kraftfahrzeugs von Vorteil ist. Zur Herstellung eines solchen Lenkritzels kann ein Werkzeug verwendet werden, wie es schematisch in Fig. 6 gezeigt ist. Der Abstand T zwischen den Teilwerkzeugen entspricht der Teilung T der Verzahnung des Lenkritzels. Der Abstand der beiden mittleren Teilwerkzeuge ist T + x, wobei x der Dickenänderung des Mittenzahns entspricht. Beim Abwälzen dieses in Fig. 6 gezeigten Werkzeugs entsteht die in Fig. 5 gezeigte Verzahnung mit einem dicken Mittenzahn.

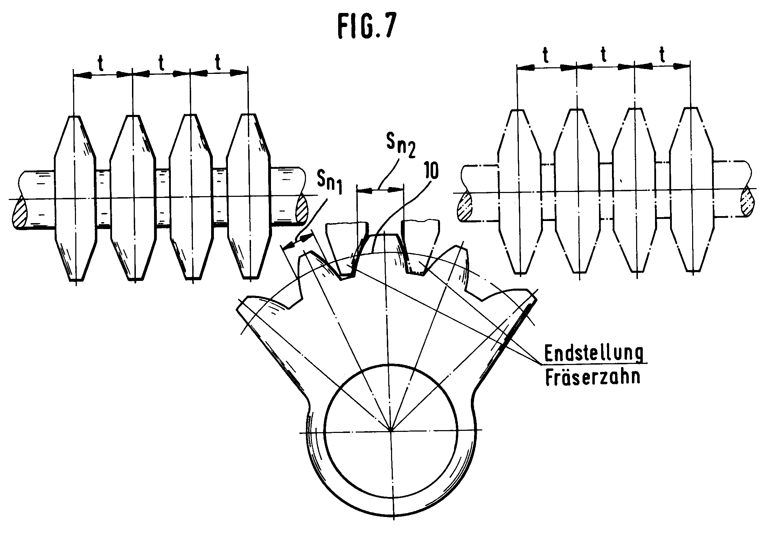

Steht nur ein Werkzeug mit gleicher Teilung zur Verfügung, wie dies beispielsweise in Fig. 7

gezeigt ist, wird zunächst die linke Seite des Zahnradsegments hergestellt und der Abwälzvorgang abgebrochen, wenn eine Flanke des Mittenzahns erreicht ist. Anschließend erfolgt ein erneutes Abwälzen von der anderen Seite des Zahnradsegments her, bis wiederum die andere Flanke des Mittenzahns erreicht ist. Es ist offensichtlich, daß sich durch eine entsprechende Positionierung des Werkzeuges relativ zur Verzahnung der Mittenzahn eine beliebige Dicke aufweisen kann, die nichts mit dem Abstand bzw. der Teilung der Teilwerkzeuge zu tun hat.

**Patentansprüche**

1. Verfahren zur Verzahnungsherstellung, insbesondere zur Herstellung von Zahnrädern oder Zahnradsegmenten, in einem Teilwälzverfahren, **dadurch gekennzeichnet,** daß ein um seine Längsachse rotierendes Verzahnungswerkzeug (11) mit in zueinander parallelen Ebenen im Abstand jeweils einer Teilung der herzustellenden Verzahnung angeordneten scheibenförmigen Teilwerkzeugen (15) in einen Teilkreis (24) eines mit der Verzahnung zu versehenen Werkstückes (13) eingreift und während des Eingriffs mit einer axialen Vorschubbewegung überlagert auf diesem abgewälzt wird, wobei jeder Zahnlücke (25) ein Teilwerkzeug (15) zugeordnet ist.

2. Verfahren nach Anspruch 1, **dadurch gekennzeichnet,** daß zu Beginn des Verfahrens das Verzahnungswerkzeug (11) bei axialem Nullvorschub mit seinem im Vorschubrichtung vordersten Teilwerkzeug (15) bis auf Zahnhöhe in den Teilkreis (24) des Werkstückes (13) einfährt, und anschließend bei einer Kopplung einer axialen Vorschubachse (20) des Verzahnungswerkzeuges (11) mit einer Rotationsachse (21) des Werkstücks (13) auf dem Teilkreis (24) des Werkstückes (13) abwälzt.

3. Verfahren nach Anspruch 1 oder 2, **dadurch gekennzeichnet,** daß bei um einen Steigungswinkel $\gamma$ zur axialen Vorschubachse (20) des Verzahnungswerkzeuges (11) geneigter Ebene des Werkstücks (13) dieses um die Komponente des axialen Vorschubes in Richtung seiner Rotationsachse (21) auf das Verzahnungswerkzeug (11) zubewegt wird.

4. Verfahren nach einem Ansprüche 1 bis 3, **dadurch gekennzeichnet,** daß zur Erzeugung oder Bearbeitung von vergleichsweise breiten Zahnflanken ein mehrmaliges in Breitenrichtung versetztes Abwälzen des Verzahnungswerkzeugs (11) auf dem Werkstück (13) erfolgt.

5. Verfahren nach Anspruch 4, **dadurch gekennzeichnet,** daß die Eintauchtiefe der einzelnen Abwälzvorgänge unterschiedlich ist.

6. Verfahren nach Anspruch 4 oder 5, **dadurch gekennzeichnet,** daß die Ebene der Abwälzbewegung und die Stirnebene des Werkstückrades (13) bei wenigstens einigen Abwälzvorgängen einen Winkel zueinander aufweisen.

7. Verfahren nach einem der Ansprüche 1 bis 6, **dadurch gekennzeichnet,** daß zur Erzeugung von Verzahnungen mit ungleichen Teilungen der Abstand der Teilwerkzeuge (15) ebenfalls ungleich ist.

8. Verfahren nach einem der Ansprüche 1 bis 6, **dadurch gekennzeichnet,** daß zur Erzeugung von Zahnsegmenten mit Zähnen unterschiedlicher Dicke das Verzahnungswerkzeug in mehreren aufeinanderfolgenden Schnitten abgewälzt wird, wobei die unterschiedliche Dicke durch entsprechende Shiftbewegungen erzeugt wird.

9. Verfahren nach einem der Ansprüche 1 bis 6, **dadurch gekennzeichnet,** daß zur Erzeugung von Zahnsegmenten mit einem Mittenzahn unterschiedlicher Dicke das Verzahnungswerkstück (11) zunächst von einer Seite und dann von der anderen Seite bis zur Dicke des Mittenzahns abgwälzt wird.

10. Verfahren nach einem der Ansprüche 1 bis 9, **dadurch gekennzeichnet,** daß zur Erzeugung von kompletten Zahnrädern die Zähl der Teilwerkzeuge der Zähl der Zähne des Werkstrückrades entspricht.

11. Verfahren nach einem der Ansprüche 1 bis 9, **dadurch gekennzeichnet,** daß zur Erzeugung von kompletten Zahnrädern das Werkzeug mehrmals hintereinander auf dem Werkstückrad abgewälzt wird.

12. Verfahren nach einem oder mehreren der vorangehenden Ansprüche, **dadurch gekennzeichnet,** daß die Herstellung der Verzahnung mit einem Schleifwerkzeug als Verzahnungswerkzeug (11) im Teilwälzschleifverfahren erfolgt.

**13.** Verfahren nach einem oder mehreren der Ansprüche 1 bis 10, **dadurch gekennzeichnet,** daß die Herstellung der Verzahnung mit einem Fräswerkzeug als Verzahnungswerkzeug (11) im Teilwälzfräsverfahren erfolgt.

**14.** Vorrichtung zur Verzahnungsherstellung, insbesondere zur Herstellung von Zahnrädern oder Zahnradsegmenten, in einem Teilwälzverfahren, **gekennzeichnet durch** ein mehrere Teilwerkzeuge (15) aufweisendes Verzahnungswerkzeug (11), wobei die Teilwerkzeuge (15) parallel zueinander im Abstand von jeweils einer Teilung der herzustellenden Verzahnung auf einer Werkzeuglängsachse angeordnet sind, und eine bezüglich ihrer Rotationsachse (21) mit einer axialen Vorschubachse (20) des Verzahnungswerkzeuges (11) koppelbaren Werkstückaufnahme (12).

**15.** Vorrichtung nach Anspruch 13, **dadurch gekennzeichnet,** daß das Verzahnungswerkzeug (11) mehrere scheibenförmig ausgebildete, einstückig ineinander übergehende Fräsbereiche (15) aufweist.

**16.** Vorrichtung nach Anspruch 13, **dadurch gekennzeichnet,** daß das Verzahnungswerkzeug (11) mehrere auf einer gemeinsamen Werkzeuglängsachse angeordnete Scheibenfräser (15) aufweist.

**17.** Vorrichtung nach Anspruch 13, **dadurch gekennzeichnet,** daß das Verzahnungswerkzeug (11) mehrere scheibenförmig ausgebildete, einstückig ineinander übergehende Schleifbereiche (15) aufweist.

**18.** Vorrichtung nach Anspruch 13, **dadurch gekennzeichnet,** daß das Verzahnungswerkzeug (11) mehrere auf einer gemeinsamen Werkzeuglängsachse angeordnete Schleifscheiben (15) aufweist.

# FIG.1

# FIG.2

## FIG. 3

## FIG. 4a  FIG. 4b  FIG. 4c  FIG. 4d

# FIG.5

$S_n$

# FIG.6

t    t+x    t

FIG.7

Endstellung
Fräserzahn

$S_{n2}$

10

$S_{n1}$

11